# EUROPEAN PATENT APPLICATION

(11) **EP 1 291 539 A2**
(43) Date of publication of application: **12.03.2003**
(21) Application number: 02256247.4
(22) Date of filing: 10.09.2002
(51) Int. Cl.: F16D 3/22

(54) **An outer race for a constant-velocity joint and manufacturing method therefor**

(30) Priority: 10.09.2001 JP 2001273004
(71) Applicant: Aida Engineering Co., Ltd., Sagamihara-shi, Kanagawa 229-1181 (JP)
(72) Inventor: Kanamaru, Hisanobu, c/o Aida Engineering Co. Ltd., Sagamihara-shi, Kanagawa 229-1181 (JP); Ishinaga, Noboyuki, c/o Aida Engineering Co. Ltd, Sagamihara-shi, Kanagawa 229-1181 (JP)
(74) Representative: Bryer, Kenneth Robert

(57) **Abstract**

An outer race for a constant-velocity joint is described, which is high precision, lightweight, and rotationally well balanced. A method of manufacturing the same is also described. The method of manufacturing an outer race for constant velocity joint does not place an excessive load on the mould used in the method. The method involves the use of a blank (1;11) obtained by a forging method and which therefore is isotropic in the circumferential direction. The blank is formed into an outer race using forward extrusion.

## Description

The present invention relates to an outer race for a constant-velocity joint and to a method of manufacturing the same. A "constant-velocity joint" is used in wheel axles for automobiles, e.g., tripod-type constant-velocity joints, double-offset constant-velocity joints, and birfield constant-velocity joints. An "outer race" is a component of the constant-velocity joints having a housing provided with tracks and ball grooves.

A tripod-type constant-velocity joint is described in Unexamined Patent Application Hi 1-101257. A double-offset constant-velocity joint and birfield constant-velocity joint are described in Unexamined Patent Application H8-49727 and Unexamined Patent Application H1-26 1520, respectively.

The outer race of such constant-velocity joints is conventionally formed by the backward extrusion of a cylindrical blank, a cylindrical blank given a stepped shape or by the drawing of a plate material.

Problems with the prior art outer races include a tendency of eccentricity to exist between the inner and outer diameters that result in poor balance as a rotating element. Conventional outer races of the prior art tend to be moulded with excess material, which adds needless weight. Additionally, there is a considerable load placed on the metal mould used to form the outer race and this results in shorting the lifespan of the mould. Problems with the moulding method of the prior art include the occurrence of trimmings on the edges of the drawn article, which are formed due to the plate material's anisotropy, and warping after forming.. The trimmings, the anisotropy and the warping all result in substandard precision of the races. Lastly, conventional moulds are difficult when dealing with variable material thickness and are of insufficient strength.

The present invention seeks to provide a high-precision, lightweight, and rotationally balanced outer race for a constant-velocity joint. A method of manufacturing the joint is likewise provided.

According to one aspect of the present invention, there is provided an outer race for a constant-velocity joint characterised in that it is made from a forged blank including:
a shaft; and
a flange integral to the shaft, wherein a thickness of a base portion of the flange is substantially equal to a thickness of a bottom portion of the finished outer race.

One advantage of an outer race for a constant-velocity joint formed according to this invention is that it does not place an excessive load on moulds used for manufacturing the outer race.

According to another aspect the invention provides a method of manufacturing an outer race for a constant-velocity joint, characterised in that it includes the step of forging a blank having a shaft and a flange.

In performing the method of the invention a blank, obtained by a forging method, is used and is shaped to manufacture the outer race. The blank is forged so it will be isotropic in the circumferential direction.

Patent Application JP-2000-093 345, recites a. similar method, and was filed by the present applicant. Application W-2000-093345 concerns a shaft-mounted gear, which differs from the outer race for constant-velocity joints with which the present application is concerned, although the manufacturing methods are similar.

More specifically, an outer race for a constant-velocity joint is provided that is formed from an article formed by a forging method. The outer race has a shaft and a flange, and the thickness of the base of the flange is approximately the same as the thickness of the finished article. Additionally, an outer race for a constant-velocity joint can be formed as described above, in which drawing the article forms a cup-shape intermediate article. The tracks and ball grooves can be formed by subjecting the intermediate article to extrusion that forms the housing into a predetermined shape with a relative low load.

The method of manufacturing for an outer race for a constant-velocity joint includes forming the joint from an article made by a forging method. The joint has a shaft and a flange, and the thickness of the base of the flange is approximately the same as the thickness of the finished article. Additionally, the joint can be formed by taking a cup-shape intermediate article and extruding the article to form tracks and ball grooves.

An outer race for a constant-velocity joint as defined above can also include a bottom of the housing not being round but of a shape similar to that of the external shape of the housing. Also, the outer race can be forged by cold forging.

Various embodiments of the present invention will now be more particularly described, by way of example, with reference to the accompanying drawings, in which like reference numerals in the various figures are utilized to designate like components, and in which:
Figure 1 is a cross-sectional view of the first stage of formation of the outer race for a constant-velocity joint of a first embodiment;
Figure 2(a) is a top view of the outer race of Figure 2(b);
Figure 2(b) is a cross-sectional view of the second stage of formation for the outer race of the first embodiment;
Figure 3(a) is a top view of the outer race of Figure 3(b);
Figure 3(b) is a cross-sectional view of the final stage of formation for the outer race of the first embodiment;
Figure 4 is a front and side perspective view of the final outer race according to the first embodiment;
Figure 5 is a cross-sectional view of the first stage of formation of the outer race for constant-velocity joints of a second embodiment;
Figure 6(a) is a top view of the outer race of Figure 6(b);
Figure 6(b) is a cross-sectional view of the second stage of formation for the outer race of the second embodiment;
Figure 7(a) is a top view of the outer race of Figure 7(b);
Figure 7(b) is a cross-sectional view of the final stage of formation for the outer race of the second embodiment; and
Figure 8 is a front and side perspective view of the final outer race according to the second embodiment.

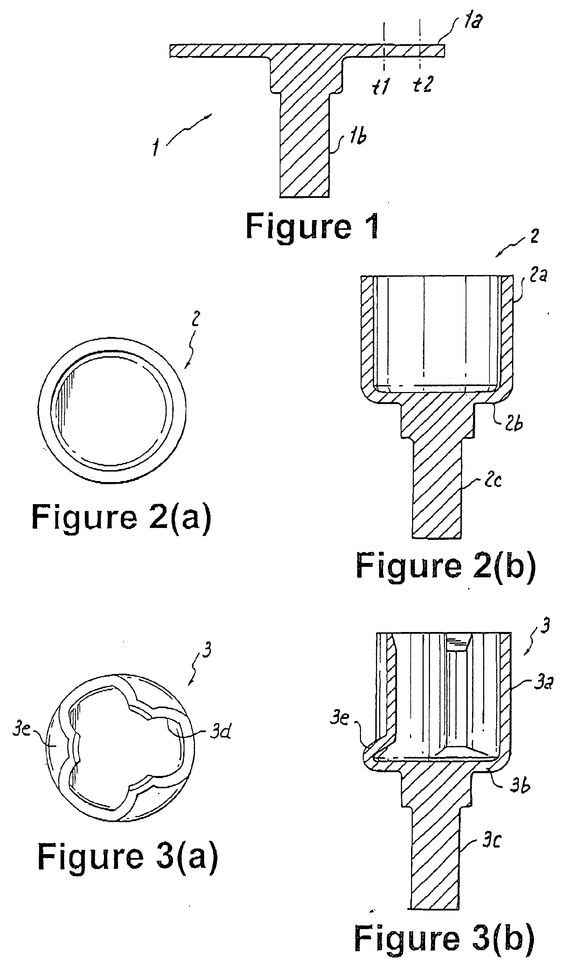

Referring now to Figures 1-3, the process of forming a tripod-type constant-velocity joint is illustrated. A blank 1 comprises a flange 1a and a shaft 1b. Blank 1 is made from cylindrical material using an extrusion-and-swaging forming method. Therefore, flange 1a is uniform, i.e., isotropic, in the circumferential direction. Blank 1 may be forged by hot forging, warm forging, and cold forging. The relative advantages and disadvantages of each forging method are widely known by those of skill in the art.

Blank 1 includes shaft 1b which becomes a shaft 3c of a finished article 3, and flange 1a becomes a housing 3a. Flange 1a is formed by compressing the cylindrical element. The thickness of the base of flange 1a is approximately the same as that of a bottom 3b of finished article 3. It is necessary to form a thickness of the base of flange 1a to be approximately the same as that of bottom 3b.

A thickness t2 of another portion of flange 1a is about 10% greater than that of housing 3a of finished article 3. Although subsequent processing of the shaft 1b is not included in the present embodiment, splining of shaft 1b and imparting stepped shape are also possible.

Referring to Figures 2(a) and 2(b), blank 1 is drawn to form an intermediate article 2. One method which may be used to form intermediate article 2 is described below. Blank 1 is placed on a die (not illustrated) having a tapered cavity and pressed in with a punch (not illustrated) having an outer diameter corresponding to the inner diameter of a cup-shaped portion 2a of intermediate article 2. The die and punch transform blank 1 into intermediate article 2.

Intermediate article 2 is next inserted upside-down into a female mould (not illustrated) comprising a die the hole of which has the same exterior shape as housing 3a and an upwardly and downwardly movable counterpunch (not illustrated), the exterior shape of which is the same as the interior shape of housing 3a. intermediate article 2 is then pressed in with a ring-shaped punch (not illustrated) that presses against a bottom portion 2b of intermediate article 2. This pressure causes the forward extrusion that transforms intermediate article 2 into finished article 3.

The forward extrusion primarily involves the forming of tracks 3d. This reduces the degree of forming (processing) of finished article 3 and reduces the load which has to be applied to the mould. By reducing the degree of forming and the load, the lifespan of the mould can be increased beyond that of the prior art methods.

Although the present application describes a process whereby blank 1 is transformed into intermediate article 2 by means of drawing, intermediate article 2 may also be formed by ironing or washing.

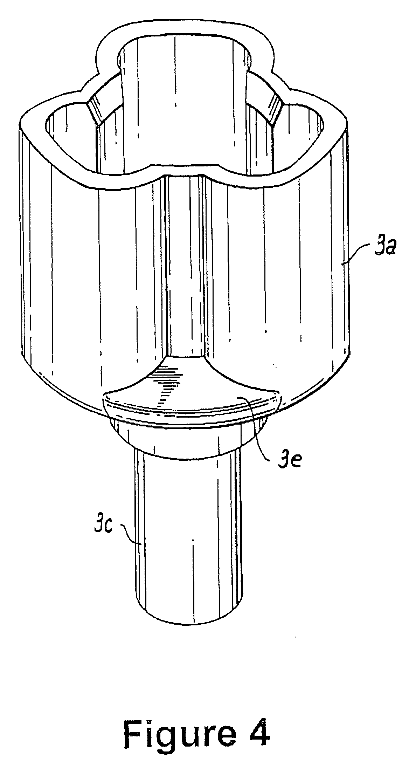

Referring to Figures 3(b) and 4, an unpressed portion 3e of finished article 3 is formed by compression caused by the pressing action of the shoulder of the die cavity and the end of the ring-shape punch.

Although the interior shape and exterior shape of unpressed portion 3e are not constrained by the mould, the three unpressed portions are given approximately the same shape and dimensions by the method recited in the present application.

Figure 4 is a front and side perspective view of the finished article 3 as shown in Figures 3(a) and 3(b). Finished article 3, illustrated in Figures 3(a), 3(b) and 4, has an inclined chamfering at the opening end of the housing 3a. The chamfers may be formed by forward extrusion.

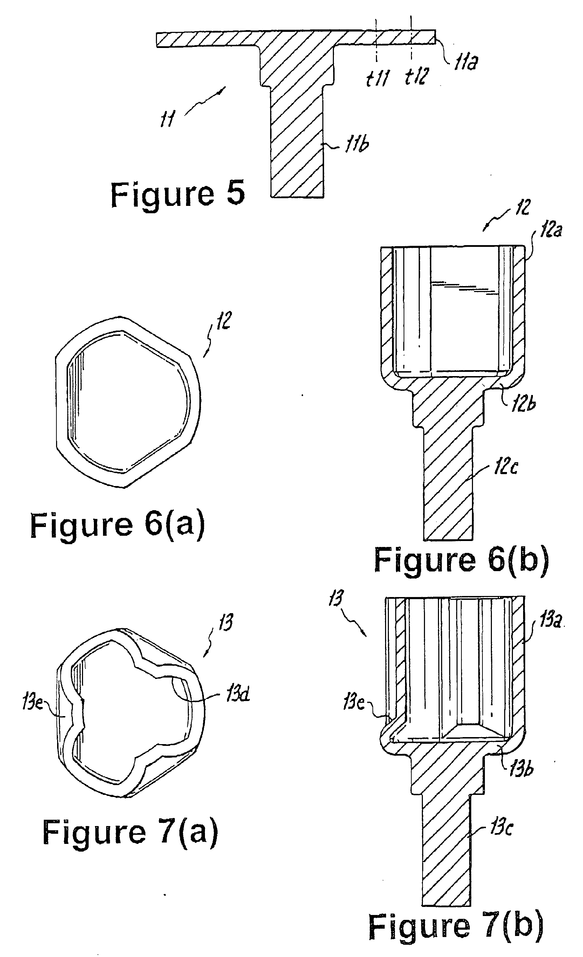

Figures 5-7 illustrate an alternative process for producing the outer race of the present invention. The second embodiment differs from the first embodiment in that the bottom portions of the intermediate article and finished article are not round in shape. However, the second embodiment is manufactured in a very similar way to the first embodiment, that is extrusion is performed after drawing, and a blank 11 is obtained by means of extrusion and swaging of cylindrical material.

Figures 6(b) and 7(b) illustrate the respective bottom portions 12b, 13b of an intermediate article 12 and a finished article 13 are not round in end view but rather of the same shape as the housing 13a. The shape of the bottom portion results from cutting a portion of a round member. Therefore, the dimensions of unpressed portion 13e are small, providing the advantage of reducing product weight.

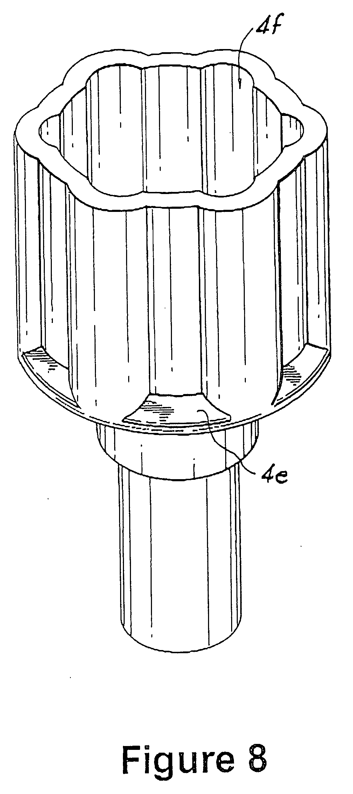

Figure 8 is a front and side perspective drawing of a double-offset finished article that includes a bail groove 4f. A similar process to that described above, forms the finished article as illustrated in Figure 8. Although the preceding examples involve tripod-type and double-offset constant-velocity universal joints, an outer race for a birfield constant-velocity joint may be formed in essentially the same manner. That is, the outer race can be formed in the same manner as that of the aforesaid embodiments by drawing and then extruding a blank so as to form ball grooves 4f. However, because ball grooves 4f are undercut or have a shape such that a portion having a larger diameter than the cavity exists in the interior, a sizing process should be performed after extrusion. The ball grooves may be undercut by means of sizing.

The present process of utilizing a blank made by forging produces a finished article that is isotropic in the circumferential direction and has no eccentricity. This yields a product that does not deform after forming and therefore has high precision and good rotational balance.

Another aspect of the present process requires drawing prior to extrusion and therefore involves a low degree of forming in extrusion. Thus, the mould used is subjected to only a light load arid that results in a long lifespan for the mould.

To reduce the weight and to lower the load required to form finished article 3, the bottom portion 3b of finished article 3 is not round in shape but rather approximates the outer shape of housing 3a that results in a small unpressed portion 3e.

A further aspect of the present process employs a blank 1 obtained by cold forging, this results in a high-precision final product.

Thus, while there have been shown, described, and pointed out fundamental novel features of the invention as applied to a preferred embodiment thereof it will be understood that various omissions, substitutions, and changes in the form and details of the devices illustrated, and in their operation, may be made by those skilled in the art within the ambit of the present invention. For example, it is expressly intended that all combinations of those elements and/or steps which perform substantially the same function, in substantially the same way, to achieve the same results are within the scope of the invention. Substitutions of elements from one described embodiment to another are also fully intended and contemplated. It is also to be understood that the drawings are not necessarily drawn to scale, but that they are merely conceptual in nature. It is the intention, therefore, to be limited only as indicated by the scope of the claims appended hereto.

## Claims

1. An outer race for a constant-velocity joint **characterised in that** it is made from a forged blank including:
a shaft (1b;11b); and
a flange (1a;11a) integral to the shaft (1b;11b), wherein a thickness of a base portion (2b;12b) of the flange is substantially equal to a thickness of a bottom portion of the finished outer race.

2. An outer race for a constant-velocity joint according to Claim 1,
**characterised in that** it is formed from an intermediate article (2;12) formed from drawing the forged blank (1;11), the intermediate article (2;12) including:
a cup-shape portion (1a;12a);
a plurality of tracks (3d) formed on the cup-shaped portion (2a); and
a plurality of ball grooves (4f) formed on the cup-shaped portion;
wherein the cup-shaped portion, the tracks (3d) and the ball grooves (4f) form a housing of the outer race.

3. An outer race for a constant-velocity joint according to Claim 2,
**characterised in that** the housing of the outer race includes a housing bottom portion (3b) having a shape substantially similar to that of the cross section of the housing (3a).

4. An outer race for a constant-velocity joint according to Claim 1,
**characterised in that** the forged blank is cold forged.

5. An outer race for a constant-velocity joint according to Claim 1,
**characterised in that** the flange (1a) has a thickness greater than the thickness of the housing (3a) of the finished outer race.

6. An outer race for a constant-velocity joint according to Claim 5,
**characterised in that** at least a portion of the said flange has a thickness about 10% greater than the thickness of the housing (3a) of the finished outer race.

7. A method of manufacturing an outer race for a constant-velocity joint,
**characterised in that** it includes the step of forging a blank (1) having a shaft (1b and a flange (1a).

8. A method of manufacturing an outer race for a constant-velocity joint according to Claim 7, **characterised in that** it further comprises the step of: forming a cup-shaped intermediate article (2) by drawing the blank; and forming a plurality of tracks and a plurality of ball grooves (3d).

9. A method of manufacturing an outer race for a constant-velocity joint according to Claim 8, **characterised in that** it further comprises the step of: forming a housing (3) from the cup-shaped intermediate article (2), wherein the intermediate article has a bottom portion (3b) having a shape substantially similar to that of the housing (3).

10. A method of manufacturing an outer race for a constant-velocity joint according to Claim 7, **characterised in that** the forging step is cold forging.

11. A method of manufacturing an outer race for a constant-velocity joint,
**characterised in that** it comprises the steps of:
(a) forging a blank (1) having a shaft (1b) and a flange (1a), wherein a thickness of a base portion (t1) of the flange (1a) is substantially equal to a thickness of a bottom portion (3b) of the outer race;
(b) drawing the blank to form a cup-shaped portion (2a) of an intermediate article (2);
(c) forming a plurality of tracks and a plurality of ball grooves on the said cup-shaped portion (2a); and
(d) forming a housing (3) from the cup-shaped portion (2a),
wherein a thickness of a bottom portion (3b) of the housing is substantially equal to the thickness (t1) of the flange (1a), and the shape of the bottom portion (3b) is substantially equal to the shape of the housing (3a).
